(19) Europäisches Patentamt
European Patent Office
Office européen des brevets

(11) Veröffentlichungsnummer: **0 018 534**
**B1**

(12) # EUROPÄISCHE PATENTSCHRIFT

(45) Veröffentlichungstag der Patentschrift: **30.12.81**

(51) Int. Cl.³: **A 23 J 1/14,** A 23 L 1/20, A 23 J 1/00

(21) Anmeldenummer: **80102006.6**

(22) Anmeldetag: **15.04.80**

(54) **Verfahren zur Verbesserung der Eigenschaften von Schroten oder Mehlen aus Ölsaaten.**

(30) Priorität: **19.04.79 DE 2915762**

(43) Veröffentlichungstag der Anmeldung: **12.11.80 Patentblatt 80/23**

(45) Bekanntmachung des Hinweises auf die Patenterteilung: **30.12.81 Patentblatt 81/52**

(84) Benannte Vertragsstaaten: **AT BE CH DE FR GB IT LI LU NL SE**

(56) Entgegenhaltungen:
**DE-A-2 405 593**
**DE-A1-2 639 532**
**DE-A1-2 748 885**
**GB-A-1 318 596**
**US-A-3 790 553**

(73) Patentinhaber: **HOECHST AKTIENGESELLSCHAFT, Postfach 80 03 20, D-6230 Frankfurt/Main 80 (DE)**

(72) Erfinder: **Schlingmann, Merten, Dr., Schneidhainer Strasse 32a, D-6240 Königstein/Taunus (DE)**
Erfinder: **Faust, Uwe, Dr., Kelkheimer Strasse 27, D-6233 Kelkheim (Taunus) (DE)**
Erfinder: **von Rymon Lipinski, Gert-Wolfhard, Dr., Hoerselbergstrasse 5, D-6230 Frankfurt am Main 80 (DE)**

**EP 0 018 534 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Verbesserung der Eigenschaften von Schroten oder Mehlen aus Ölsaaten

Die Erfindung betrifft ein Verfahren zur Verbesserung der Eigenschaften von Schroten oder Mehlen aus Ölsaaten, insbesondere Lupinensamen, durch Verminderung ihres Gehalts an lipoiden Verbindungen und wasserlöslichen Verbindungen, die negative Einflüsse auf Geruch, Geschmack, Nährwert und Verträglichkeit haben. Negative Auswirkungen auf den Geruch haben z.B. Folgeprodukte aus Oxydationsreaktionen ungesättigter Fettsäuren; Peptide bestimmter Konstitution und Alkaloide wie z.B. Spartein oder Lupinin rufen Bittergeschmack hervor. Die Verwendbarkeit der Mehle von Ölsaaten, insbesondere Lupinensamen, in Futter- und besonders Nahrungsmitteln wird durch den Gehalt solcher Verbindungen stark eingeschränkt.

Aufgabe der vorliegenden Erfindung ist es daher, bittere Alkaloide, lipoide Verbindungen, wie Fettoxidationsprodukte, Glykoside vom Saponintyp, Peptide mit hohem Gehalt an hydrophoben Aminosäuren aus gemahlenen Ölsaaten, insbesondere Lupinensamen, zu entfernen, und damit den Proteinanteil, der entscheidend für den nutritiven Wert ist, zu erhöhen.

Nach bekannten Verfahren werden Lipide und alkaloide Bitterstoffe aus den Pflanzenzellen durch organische Lösungsmittel herausgelöst. Ausserdem wurde versucht, die Bittergehalte durch Züchtung von sog. Süsslupinen zu senken. Diese Zuchtsorten konnten sich in den grossen Anbaugebieten jedoch nicht durchsetzen.

Nachteilig bei der herkömmlichen Lösungsmittelbehandlung ist die Dauer der Extraktion. Die Behandlung von Mehlen aus Ölsaaten, insbesondere Lupinensamen, mit organischen Lösemitteln, wie Hexan oder Chlorkohlenwasserstoffen, ist zeitraubend und führt zu Produkten, die aufgrund der Restfettgehalte (1–4%) nicht geruchsfrei, und auf Grund der nur 60–70%igen Alkaloidentfernung noch stark bitter sind.

Es wurde ein Verfahren zur Verbesserung der Eigenschaften von Schroten oder Mehlen aus Ölsaaten, insbesondere Lupinensamen, durch Verminderung ihres Gehalts an bitteren Alkaloiden, lipoiden Verbindungen und unerwünschten wasserlöslichen Verbindungen gefunden, das dadurch gekennzeichnet ist, dass man die geschroteten oder gemahlenen Samen mit einer Extraktionsmischung aus Ammoniak oder Ammoniumhydroxyd und einem organischen Lösungsmittel der allgemeinen Formel I

$$R_1–(C_nH_{2n})–OR_2 \quad (I)$$

worin entweder $R_1$ und $R_2$ Wasserstoff bedeuten und n für eins, zwei oder drei steht, oder worin $R_1$ die Hydroxygruppe und $R_2$ Wasserstoff, Methyl oder Äthyl bedeuten und n für zwei oder drei steht, behandelt und nach Abtrennen der Extraktionsmischung den Rückstand der Samen mit Wasser wäscht.

Als geschrotete oder gemahlene Samen werden Ölsaaten verwendet, deren Schrote oder Mehle nach der Entfettung als Proteinträger gelten, insbesondere Lupinensamen.

Als Lösungsmittel der Formel I kommen Alkohole wie Methanol, Äthanol, n-Propanol und iso-Propanol in Betracht. Bevorzugt sind Methanol und Äthanol, insbesondere Methanol.

Ausser den genannten Alkoholen eignen sich Glykole und ihre Monoäther der Formel I, namentlich Glykol und Monomethylglykol.

Ammoniak kann den genannten Lösungsmitteln gasförmig ($NH_3$) oder als konzentrierte wässrige Lösung ($NH_4OH$) zugesetzt werden. Die Wahl erfolgt nach Wassergehalt des Schrotes oder Mehles, sowie nach Menge und Wassergehalt des eingesetzten Lösungsmittels. $NH_4OH$ eignet sich bei Mehl mit geringem Feuchtigkeitsgehalt (0–15%), $NH_3$ dagegen besser bei Rohstoffen mit höherem Wassergehalt (10–30%).

Die Entfernung von lipoiden Verbindungen und Alkaloiden hängt vom Gesamtwassergehalt, der in Gew.-% auf die verwendete Lösungsmittelmenge bezogen wird, und von der $NH_3$-Konzentration in Gew.-%, bezogen auf das eingesetzte Lösungsmittel ab.

Besonders gute Versuchsergebnisse liessen sich bei Schrot- bzw. Mehl-Lösungsmittel-Gewichtsverhältnissen von 1:3 bis 1:10 bei Methanol und Äthanol und 1:8 bis 1:15 bei Propanol, Glykol und den Monoglykoläthern erzielen. Die Ammoniakkonzentration, bezogen auf die Lösungsmittelmenge, betrug 1–15 Gew.-%, vorzugsweise 5–12, insbesondere 6–9 Gew.-%. Die Summe der Wassermengen, die herrühren aus Zellmasse, Lösungsmittel und gegebenenfalls aus wässrigem Ammoniak, betragen 0–30 Gew.-%, bevorzugt 0–20%, insbesondere 0–10 Gew.-%, bezogen auf die eingesetzte Lösungsmittelmenge.

Das Lösen der Alkaloide und Fette aus dem geschroteten oder gemahlenen Samen wird so durchgeführt, dass das Mehl im Lösungsmittel suspendiert und $NH_3$ eingeleitet oder $NH_4OH$ zugegeben wird. Zweckmässig ist das Durchmischen der Suspension durch Rühren. Die Behandlungstemperaturen liegen im allgemeinen im Bereich von − 20 ° bis +60 °C, wobei ein Bereich von +5 bis +50 °C und insbesondere von +10 ° bis +30 °C bevorzugt ist. Die Behandlungsdauer beträgt 5 bis 180 Minuten und liegt vorzugsweise bei 35–60 Minuten. Die Behandlung wird im allgemeinen bei Normaldruck durchgeführt.

Nach Beendigung der Lösungsmittel-Ammoniak-Behandlung wird der entfettete und von Bitterstoffen befreite Rückstand nach bekannten Verfahren wie Zentrifugieren, Filtration und Sedimentation vom Lösungsmittel getrennt.

Bevorzugt wird die Filtration. Der erhaltene feste Rückstand kann zur möglichst vollständigen Entfernung der Lipide und Alkaloide mit einem organischen Lösungsmittel der Formel I nochmals behandelt werden. Der Rückstand kann zur Entfernung von Lösungsmittelresten und Ammoniak getrocknet werden. Zweckmässig wird dies unter vermindertem Druck, vorzugsweise 80–150 Torr, und erhöhter Temperatur, vorzugsweise 40–50 °C, durchgeführt.

Die nach dem vorstehend genannten Verfahren vom festen Rückstand abgetrennte flüssige Phase enthält neben Ammoniak und Lösungsmittel lipoide Verbindungen und 95–98% der bitteren Alkaloide. Die so behandelten Lupinensamen sind geruchlos, fast weiss und nahezu ohne Bittergeschmack.

Das eingesetzte Lösungsmittel und Ammoniak kann durch Vakuumdestillation entfernt und die gelösten Naturstoffe einer getrennten Aufarbeitung zugeführt werden.

Um den Proteinanteil der so behandelten Samen weiter zu erhöhen oder lösliche Proteinfraktionen zu isolieren, wird das entfettete und ggf. getrocknete Mehl in Wasser aufgenommen.

Bevorzugt sind Wassermengen, die zum Schrot oder Mehl im Gew.-Verhältnis 1:1 bis 1:30, insbesondere 1:5 bis 1:15, stehen. Die Wassermenge wird mindestens so bemessen, dass ein Rühren der Suspension möglich ist.

Der pH-Wert während der Wasserbehandlung soll im Bereich von 5,0–10,0, bevorzugt 6,0–9,0 liegen und wird ggf. auf diesen Bereich durch Zusatz von Säure oder Lauge eingestellt. Dies ist insbesondere dann notwendig, wenn nicht oder nicht vollständig getrocknete Mehle aus der ersten Extraktionsstufe verwendet werden, die dann auch noch Restmengen an Ammoniak enthalten, was zu einem zu hohen pH-Wert führen kann. Diese Extraktion hat das Ziel, lösliche Proteine zu extrahieren und durch Fällungsreaktionen von ebenfalls gelösten aber unerwünschten Stoffen wie Glykosiden, bitteren Peptiden oder Mineralsalzen zu trennen.

Die Extraktion wird im allgemeinen in einem Temperaturbereich von 30 °–95 °C bei Normaldruck durchgeführt. Bevorzugt sind Temperaturen von 40 °–70 °C, besonders bevorzugt 50 °–60 °C. Die Extraktionsdauer kann je nach Extraktionstemperatur und Wassermenge 5–120 Minuten betragen, gute Ergebnisse erzielt man mit 25–45 minütiger Extraktionszeit. Zur Trennung fester und flüssiger Bestandteile wird die Suspension, vorzugsweise bei Temperaturen von 10 °–30 °C, filtriert. Andere geeignete Trennverfahren sind Sedimentation und Zentrifugation.

Der feste Rückstand, der wasserunlösliche Proteine und Kohlenhydrate enthält, wird nach bekannten Verfahren wie Gefrier-, Vakuum- oder Sprühtrocknung von Flüssigkeitsresten befreit.

Der Extrakt wird mit anorganischen Säuren wie Salzsäure, Schwefelsäure oder Phosphorsäure oder organischen Säuren wie Essigsäure auf pH 3,5–5, bevorzugt 4,0–4,5 gebracht; dabei fällt Protein aus und wird abgetrennt, z.B. durch Filtrieren oder Zentrifugieren.

Der danach erhaltene feste Rückstand wird mit anorganischen Laugen wie Natronlauge, Ammoniumhydroxyd oder Kalilauge neutralisiert und nach bekannten Verfahren wie Gefrier-, Vakuum- oder Sprühtrocknung getrocknet.

Die Produkte haben angenehme Geschmacks- und Geruchseigenschaften, sehr hohes Wasserbindevermögen und sind weiss.

Die erfindungsgemäss behandelten Produkte haben einen besonders niedrigen Gehalt an lipoiden Verbindungen (0,1–0,6 Gew.-%) und bitteren Alkaloiden (2–5% der ursprünglich vorhandenen Menge), weshalb sie als Futter- und Nahrungsmittel besonders geeignet sind.

Das Verfahren gemäss der Erfindung vermeidet die Nachteile bekannter Lösungsmittelextraktionen wie grosse Lösungsmittelmengen, lange Behandlungszeiten, wobei hohe Restgehalte (35–40% der ursprünglich vorhandenen Menge) an bitteren Alkaloiden im Produkt verbleiben.

Das erfindungsgemäss verwendete Ammoniak wirkt nicht nur als Lösungsmittel, sondern verändert auch die mechanische Struktur der Mehle, wodurch die Extraktionszeit herabgesetzt und die Extraktionswirkung verbessert wird.

Das Verfahren wird durch folgende Beispiele beschrieben.

Beispiel 1

115 g gemahlene Lupinensamen mit einer Restfeuchte von 15%, 18% Rohfett (nach saurer Hydrolyse), 32% Rohprotein ($N_2 \times 6{,}25$), 2,6% Nucleinsäuren und 4,8% Asche wurden in 500 g Methanol suspendiert. Unter Rühren der Suspension wurden 15 g $NH_3$-Gas eingeleitet und gelöst. Durch Kühlen wurde die Temperatur während des Einleitens bei 25 °–35 ° gehalten. Das Gemisch aus Methanol, Ammoniak und Mehl wurde 30 Minuten bei 20 ° gerührt.

Zur Trennung der festen und flüssigen Phase wurde filtriert und der feste Rückstand zweimal mit je 100 ml Methanol extrahiert. Nach erneuter Filtration wurden alle Filtrate vereinigt. Die braungrüne Lösung enthielt die Alkaloide und lipoiden Verbindungen der eingesetzten Ausgangssubstanz. Methanol und Ammoniak wurden durch Vakuumdestillation (100 Torr, 40 °C) entfernt. Der Rückstand, der 17,5 Gew.-% der eingesetzten Trockenmasse betrug, war eine braungrüne Paste mit extrem bitterem Geschmack.

Der bei der Filtration erhaltene feste Rückstand des extrahierten Mehls wurde im Vakuum (100 Torr) bei 40 °C 5 Stunden lang getrocknet. Es wurden 84,0 g entfettetes Mehl mit einer Restfeuchte von 3% erhalten, das geruchlos war, eine hellere Farbe als das Ausgangsmaterial hatte und fast vollständig vom Bittergeschmack befreit war.

Das Ergebnis dieses und der weiteren Beispiele sind in der nachfolgenden Tabelle I zusammengefasst.

Beispiel 2

115 g der in Beispiel 1 beschriebenen, gemahlenen Lupinensamen wurden wie in Beispiel 1 zur Alkaloid- und Fettextraktion behandelt.

Zur Verminderung des Gehaltes unerwünschter, wasserlöslicher Verbindungen wie Mineralstoffen, bitteren Peptiden oder Glykosiden wurde das extrahierte Mehl in 600 ml Wasser suspendiert. Der pH-Wert der durch Rühren homogenisierten Suspension betrug 6,4.

Nach Erhöhung der Temperatur auf 55 °C wurde noch 20 Minuten weitergerührt, auf 30 °C abgekühlt und durch Filtration in feste und flüssige Phase getrennt. Das erhaltene Sediment wurde erneut mit 300 ml Wasser vermischt und 10 Minuten bei 20 °C gerührt. Danach wurde wieder filtriert und das Sediment unter vermindertem Druck getrocknet. So konnten 58,6 g eines weissen, geruchlosen Mehls mit einem Proteingehalt von 51,5% gewonnen werden.

Beispiel 3

Als Ausgangsmaterial diente das gleiche Lupinenmehl wie in Beispiel 2 verwendet. Es wurde den gleichen Verfahrensschritten und Bedingungen unterworfen, doch wurden statt gasförmigem $NH_3$ 40 ml konzentriertes $NH_4OH$ (33%ig) als Reagenz verwendet.

Beispiel 4

Es wurde wie in Beispiel 2 verfahren, jedoch wurden 30 g $NH_3$ eingesetzt.

Beispiel 5

Bei einer Verfahrensweise wie in Beispiel 2 wurde statt Methanol Äthanol als Lösungsmittel verwendet.

Beispiel 6

Es wurde verfahren wie in Beispiel 1. Statt Methanol wurde i-Propanol als Lösungsmittel eingesetzt.

Tabelle I

Einige analytische Daten der Produkte vor und nach dem Prozess

| Ausgangsmaterial 115 g Lupinensamen Restfeuchte 15% | | | Endprodukte 3% Restfeuchte | | |
|---|---|---|---|---|---|
| Beispiel | Rohfett Gew.-% | Protein Gew.-% | Menge (g) | Rohfett Gew.-% | Protein Gew.-% |
| 1 | 8,0 | 32,0 | 84,0 | 0,2 | 36,2 |
| 2 | 8,0 | 32,0 | 58,6 | 0,1 | 51,5 |
| 3 | 8,0 | 32,0 | 59,4 | 0,3 | 50,7 |
| 4 | 8,0 | 32,0 | 58,2 | 0,04 | 51,9 |
| 5 | 8,0 | 32,0 | 59,0 | 0,2 | 51,2 |
| 6 | 8,0 | 32,0 | 85,6 | 0,5 | 34,7 |

**Patentansprüche**

1. Verfahren zur Verbesserung der Eigenschaften von Schroten oder Mehlen aus Ölsaaten, dadurch gekennzeichnet, dass man die geschroteten oder gemahlenen Samen mit einer Extraktionsmischung aus Ammoniak oder Ammoniumhydroxyd und einem organischen Lösungsmittel der allgemeinen Formel I

$$R_1-(C_nH_{2n})-OR_2 \quad (I)$$

worin entweder $R_1$ und $R_2$ Wasserstoff bedeuten und n für eins, zwei oder drei steht, oder worin $R_1$ die Hydroxygruppe und $R_2$ Wasserstoff, Methyl oder Äthyl bedeuten und n für zwei oder drei steht, behandelt, und ggf. nach Abtrennen der Extraktionsmischung den Rückstand der Samen mit Wasser wäscht.

2. Verfahren nach Anspruch 1, dadurch gekennzeichnet, dass der Gesamt-Wassergehalt während der Extraktion 0 bis 30 Gew.-% vorzugsweise 0 bis 20 Gew.-%, insbesondere 0 bis 10 Gew.-%, bezogen auf die eingesetzte Lösungsmittelmenge, beträgt.

3. Verfahren nach Anspruch 1 und 2, dadurch gekennzeichnet, dass der $NH_3$-Gehalt während der Extraktion 1 bis 15 Gew.-%, vorzugsweise 5 bis 12 Gew.-%, insbesondere 6 bis 9 Gew.-%, bezogen auf die eingesetzte Lösungsmittelmenge, beträgt.

**Revendications**

1. Procédé pour améliorer les propriétés des produits de broyage ou des farines de graines oléagineuses, caractérisé en ce que l'on traite les graines broyées ou moulues avec un mélange d'extraction se composant d'ammoniac ou d'hydroxyde d'ammonium et d'un solvant organique de formule générale I

$$R_1-(C_nH_{2n})-OR_2 \quad (I)$$

où soit $R_1$ et $R_2$ représentent l'hydrogène et n signifie un, deux ou trois, soit $R_1$ représente le groupe hydroxy et $R_2$ représente l'hydrogène, le groupe méthyle ou le groupe éthyle et n signifie deux ou trois, et éventuellement après séparation du mélange d'extraction, on lave le résidu des graines avec de l'eau.

2. Procédé selon la revendication 1, caractérisé en ce que la teneur totale en eau pendant l'extraction est de 0 à 30% en poids, de préférence de 0 à 20% en poids, en particulier de 0 à 10% en poids, par rapport à la quantité de solvant utilisée.

3. Procédé selon les revendications 1 et 2, caractérisé en ce que la teneur en $NH_3$ pendant l'extraction est de 1 à 15% en poids, de préférence de 5 à 12% en poids, en particulier de 6 à 9% en poids, par rapport à la quantité de solvant utilisée.

**Claims**

1. Process for improving the properties of meals or flours of oily seeds, which comprises treating the crushed or ground seeds with an extraction mixture consisting of ammonia or ammonium hydroxide and an organic solvent of the formula I

$$R_1-(C_nH_{2n})-OR_2 \quad (I),$$

in which either $R_1$ and $R_2$ each are hydrogen and n is 1, 2 or 3; or $R_1$ is a hydroxy group, $R_2$ is hydrogen, methyl or ethyl, and n is 2 or 3; and, if necessary, after having removed the extraction mixture, washing the residue of the seeds with water.

2. Process as claimed in claim 1, wherein the total water content during the extraction is from 0

to 30% by weight, preferably from 0 to 20% by weight, especially from 0 to 10% by weight, relative to the amount of solvent used.

3. Process as claimed in claims 1 and 2, wherein the $NH_3$ content during the extraction is from 1 to 15% by weight, preferably from 5 to 12% by weight, especially from 6 to 9% by weight, relative to the amount of solvent used.